Europäisches Patentamt

European Patent Office

Office européen des brevets

(11) Publication number: **0 053 353**
**B1**

# EUROPEAN PATENT SPECIFICATION

(45) Date of publication of patent specification: **24.07.85**

(21) Application number: **81109885.4**

(22) Date of filing: **25.11.81**

(51) Int. Cl.⁴: **B 27 F 7/38,** B 25 C 5/16,
B 65 G 59/06

(54) **A parts supplying apparatus.**

(30) Priority: **27.11.80 JP ·169873/80 U**

(43) Date of publication of application:
**09.06.82 Bulletin 82/23**

(45) Publication of the grant of the patent:
**24.07.85 Bulletin 85/30**

(84) Designated Contracting States:
**BE DE FR GB IT**

(56) References cited:
**GB-A-1 260 478
US-A-1 665 989
US-A-1 694 599
US-A-3 604 608**

(73) Proprietor: **YOSHIDA KOGYO K.K.
No. 1 Kanda Izumi-cho Chiyoda-ku
Tokyo (JP)**

(72) Inventor: **Seki, Fumio
621, Horikawakoizumi-cho
Toyama-shi Toyama-ken (JP)**

(74) Representative: **Patentanwälte Leinweber &
Zimmermann
Rosental 7/II Aufg.
D-8000 München 2 (DE)**

## Description

The present invention relates to a parts supplying apparatus comprising an elongate chute having a track in and along which a series of staple-like stops provided with upper and lower prongs are guidedly supplied, and means for transferring said stops one at a time from said chute to a working bed.

An apparatus of this kind is used for application of staple like stops to a clothing.

Parts supplying apparatuses known in the art employ various means for transferring staple-like objects one at a time, but most of them are not at all together satisfactory in that the staples are impaired or otherwise deformed under stress applied by such means.

US—A—1,665,989 describes a parts supplying apparatus comprising an elongate chute having a track in and along which a series of transversely extending cylindrical articles are guidedly supplied and a trough-like rotor provided at the lower end of said chute. By manual rotation of said rotor said cylindrical articles can be transferred one at a time from said chute to the bottom of a vending machine from which the articles, e.g. cigars, wrapped candy rolls, or other analogous articles may be removed by a purchaser. This known apparatus is not suitable, however, for properly supplying staple-like stops.

GB—PS 1,260,478 further discloses a parts supplying apparatus comprising an elongated chute having a track in and along which a series of flat articles, e.g. bars of chocolate are guidedly supplied, and transferring means pivotally mounted at the lower end of said chute. By rotation of said transferring means an engaging portion extending thereof can be brought into engagement with a side surface of the lowermost article resting on a support secured to the lower end of said chute. By further rotation of said transferring means said lowermost article will be laterally ejected from said chute by the engagement portion of said transferring means. This known apparatus is not suitable, however, for properly supplying staple-like stops.

The present invention seeks to provide a parts supplying apparatus which is simple in construction and reliable in operation for supplying a series of staple-like stops one at a time precisely in timed relation to an associated apparatus for applying the stops to clothings and other materials.

The invention further seeks to provide an apparatus having a means capable of transferring staple-like stops one at a time efficiently and smoothly without undue stress to the stops.

A parts supplying apparatus satisfying these requirements is characterized in claim 1.

A preferred embodiment of the present invention will be described in detail thereafter with reference to the accompanying sheets of drawings.

Figure 1 is a front elevational view of an apparatus embodying the invention;

Figure 2 is a side elevation, partially cut away, of the apparatus shown in Figure 1;

Figure 3 is a cross-sectional view taken on the lines III—III of Fig. 1; and

Figure 4 is a perspective, exploded view of a portion of the apparatus utilized to explain the operation characteristic of the invention.

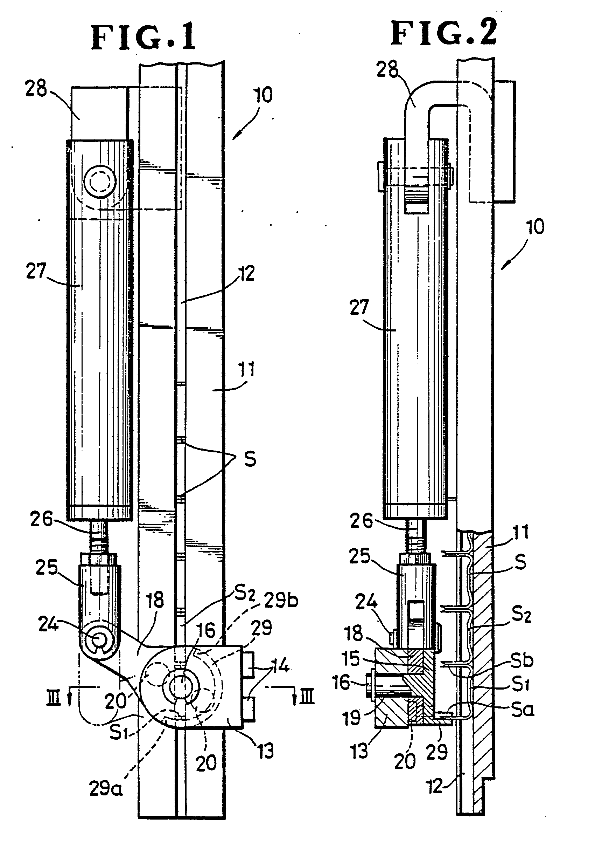

Referring now to the drawings and Figures 1 and 2 in particular, there is shown a parts supplying apparatus 10 provided in accordance with the invention. The apparatus 10 comprises an elongate chute 11 secured to a frame now shown and having a guide track 12 in the form of a generally U-shaped groove for receiving a series of staple-like stops or hooks S. The staples S each have a pair of prongs Sa, Sb designed to fit into a female part (not shown) of what is generally known as a "hook-and-eye" assembly. The staples S are disposed in substantially vertical alignment in and along the track 12 with their prong portions Sa, Sb protruding partly beyond the track 12 as better shown in Figure 2. The term staples as used herein is not limited to the precise form illustrated but may include other suitable forms.

Designated at 13 is a generally L-shaped bracket member having a first plate portion 13a and a second plate portion 13b and secured for example by bolts 14 extending through the first plate portion 13a to the frame of the chute 11 at the lower end thereof.

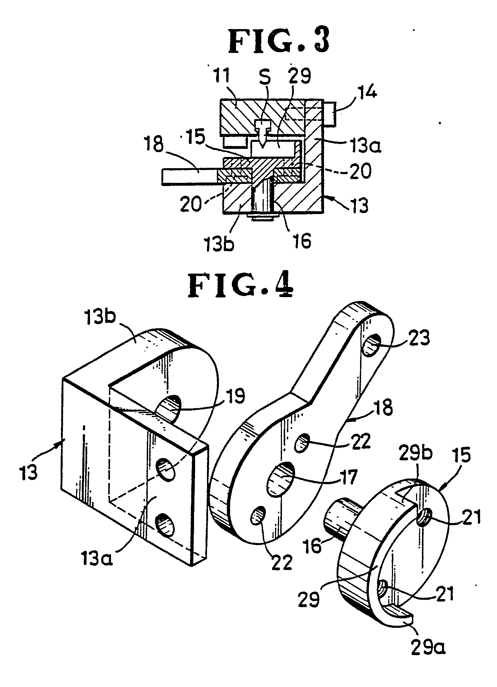

There is provided a disc-like member 15 for transferring staples S one at a time from the chute 11 to a working bed not shown. This member 15 has a center pin 16 that extends through a bore 17 in one end portion of a lever member 18 and pivotally through a bore 19 in the second plate portion 13b of the bracket member 13, the relative positions of disc-like member 15, lever member 18 and bracket member 13 being better shown in Figure 4. The disc-like member 15 and the lever member 18 are coupled together by bolts 20 extending through bores 21 and 22 in the respective members 15 and 18. The lever member 18 interposed between the disc-like member 15 and the bracket member 13 is provided at the other end with a bore 23 through which is extended a pivotal pin 24 to connect the lever member 13 pivotally to a link 25 which is in turn connected to a piston rod 26 in a pneumatically operated cylinder 27 secured as at 28 to the frame of the chute 11.

With this construction, the forward stroke, or downward movement as viewed in Figure 1, of the piston rod 26 causes the lever member 18, hence the disc-like member 15 to rotate counterclockwise, and the backward stroke or upward movement as viewed in Figure 1, of the piston rod 26 causes the members 18 and 15 to rotate clockwise for purposes to be hereafter described.

Turning back to the disc-like member 15, this has a semicircular peripheral flange 29 with its opposite end portions 29a and 29b disposed for rotation alternately into and out of the track 12 of the chute 11 in a plane perpendicular to the plane of the track 12 upon actuation of the piston rod 26 so as to feed staples S one at a time successively to the working bed in a manner more specifically described below.

For purposes of illustration, the cycle of operation begins with the apparatus 10 held in the position shown in Figures 1 and 2 in which the piston rod 26 is retracted to locate the one or lower end portion 29a of the flange 29 transversely across the track 12 of the chute 11 to allow the latter to receive the first prong Sa of a leading one $S_1$ of the staples S.

Now, as the piston rod 26 is actuated to make a forward or downward stroke for a predetermined distance to the position indicated by chain-dot line in Figure 1, this causes the disc-like member 15 to rotate counter-clockwise, whereupon the lower end portion 29a of the flange 29 is retracted away from the track 12 of the chute 11, releasing the first or lower prong Sa of the leading staple $S_1$ to be received onto the working bed.

By the time this happens, the other or upper end portion 29b of the flange 29 of the disc-like member 15 has reached across the track 12 of the chute 11, in which position the portion 29b underlies and catches the second or upper prong Sb of an ensuing or second one $S_2$ of the staples S. As the piston rod 26 is now actuated to make a backward or upward stroke to the original position shown in Figure 1, the disc-like member 15 rotates clockwise to retract the upper end portion 29b of the flange 29 away from the track 12 of the chute 11, releasing the upper prong Sb of the second staple $S_2$.

By the time this happens, the lower end portion 29a of the flange 29 has reached the track 12 ready to receive the lower prong Sa of the second staple $S_2$ that has been released from the upper end portion 29b of the flange 29.

The foregoing cycle of operation of the apparatus 10 is repeated to transfer or feed a series of staple-like stops S precisely one at a time to the working bed where the staples S are assembled as desired. Advantageously, arcuate movement of the disc-like member 15 precludes undue stress upon the staples S during transfer and hence permits such transfer smoothly without deformation of the staples S. The cycle of this transfer operation may be timed with that of an associated apparatus or tool employed to apply the staples S to a desired article in an automated manner.

Various minor modifications may be effected within the scope of the appended claims. As for an example, the pneumatic cylinder 27 may be substituted by other suitable mechanical drive means. As for another, the lever member 18 and the disc-like member 15 may be an integral unit.

## Claims

1. A parts supplying apparatus (10) comprising an elongated chute (11) having a track (12) in and along which a series of parts are guidedly supplied, and means (15) for transferring said parts (S) one at a time from said chute (11) to a working bed, characterized in that the parts consist of staple-like stops (S) provided with upper and lower prongs (Sb, Sa), a bracket member (13) is secured to one end of said chute (11), that said transferring means is a disc-like member (15) pivotally connected to said bracket member (13) for rotation around an axis perpendicular to the plane of said track (12) and having a semicircular peripheral flange (29) and in that there is provided an actuating means (26, 27) for rotating said disc-like member (15) with opposite ends (29a, 29b) of the semicircular flange (29) thereof alternately into and out of said track (12), the diameter of the semicircular flange (29) of said disc-like member (15) being greater than the distance between the upper and lower prongs (Sb, Sa) of said stops (S).

2. A parts supplying apparatus according to claim 1, wherein said actuating means is a pneumatically operated cylinder (27) having its piston rod (26) operatively connected to said transferring means (15).

## Patentansprüche

1. Vorrichtung zum Zuführen von Teilen, bestehend aus einer länglichen Rutsche (11) mit einer Führungsbahn (12), längs welcher eine Serie von Teilen zuführbar ist, und einer Einrichtung (15) zum einzelnen Überführen der Teile (S) von der Rutsche (11) zu einem Bearbeitungsbett, dadurch gekennzeichnet, daß die Teile aus bügelartigen Anschlagteilen (S) mit einem oberen und einem unteren Dorn (Sb, Sa) bestehen, daß ein Bügelteil (13) an einem Ende der Rutsche befestigt ist, daß die Überführungseinrichtung ein scheibenartiges Teil (15) ist, das mit dem Bügelteil (13) um eine zur Ebene der Führungsbahn (12) rechtwinklige Achse schwenkbar verbunden ist und das einen halbkreisförmigen Umfangsflansch (29) aufweist, und daß eine Betätigungseinrichtung (26, 27) vorgesehen ist, um das scheibenartige Teil (15) zu verdrehen und die gegenüberliegenden Enden (29a, 29b) seines Umfangsflansches (29) alternativ in die Führungsbahn (12) hinein und aus dieser heraus zu bewegen, wobei der Durchmesser des halbkreisförmigen Flansches (29) des schiebenartigen Teils (15) größer ist als der Abstand zwischen dem oberen und dem unteren Dorn (Sb, Sa) der Anschlagteile (S).

2. Vorrichtung nach Anspruch 1, dadurch gekennzeichnet, daß die Betätigungseinrichtung ein Pneumatikzylinder (27) ist, dessen Kolbenstange (26) mit der Überführungseinrichtung (15) verbunden ist.

## Revendications

1. Dispositif (10) d'alimentation en éléments, comprenant une glissière allongée (11) qui comporte une rainure (12) dans et le long de laquelle sont guidés une série d'éléments, et un moyen (15) pour transférer ces éléments un par un de la glissière (11) à une table de travail, caractérisé en ce que ces éléments se composent de butées (S) du type agrafe pourvues de branches supérieures et inférieures (Sb, Sa); en ce qu'une équerre (13) est fixée à une extrémité de la glissière (11); en ce que le moyen de transfert est un élément (15) en forme de disque monté sur l'équerre (13) de manière à pouvoir pivoter autour d'un axe perpendiculaire au plan de la rainure (12) et comportant un rebord périphérique semi-circulaire (29); et en ce qu'un moyen (26, 27) de commande est prévu pour faire tourner le moyen (15) en forme de disque, les extrémités opposées (29a, 29b) du rebord semi-circulaire (29) étant amenées à entrer dans et à sortir de la rainure (12) en alternance, le diamètre du rebord semi-circulaire (29) de l'élément (25) en forme de disque étant supérieur à la distance entre les branches supérieures et inférieures (Sb, Sa) des butées (S).

2. Dispositif d'alimentation en éléments suivant la revendication 1, dans lequel le moyen de commande est un vérin pneumatique (27) dont la tige (26) de piston est opérationnellement reliée au moyen (15) de transfert.

# FIG.1

# FIG.2

# FIG. 3

# FIG. 4